# EUROPEAN PATENT APPLICATION

(11) **EP 4 008 188 A1**
(43) Date of publication of application: **08.06.2022**
(21) Application number: 21211966.3
(22) Date of filing: 02.12.2021
(51) Int. Cl.: A23C 19/16, C08K 3/36, C08K 3/38, C08K 3/40, C09D 135/02, A01J 27/02, A23C 19/11, A23L 3/358, A23P 20/00, C08F 218/04

(54) **PROCESS FOR THE TREATMENT OF RINDED CHEESE**

(30) Priority: 04.12.2020 IT 202000029822
(71) Applicant: Consulchem di Capra Vittorio, 10131 Torino (IT)
(72) Inventor: CAPRA, Vittorio, I-10131 TORINO (IT)
(74) Representative: Gerbino, Angelo

(57) **Abstract**

The method comprises a step of forming a coating film for the cheese by using an aqueous dispersion comprising, with reference to 100 parts by weight of water: from 1 to 150 parts by weight of a polymer, the monomeric units of which are selected from the group consisting of ethylene, vinyl and acrylic esters of saturated fatty acids having from 2 to 16 carbon atoms, vinyl versatate, and maleic and formic acid esters of saturated alcohols having from 4 to 8 carbon atoms, and from 0.1 to 5 parts by weight of glass bubbles.

## Description

The present invention relates to the field of treating rinded cheeses, in particular to preventing the formation of mold on the surface thereof.

In conventional production processes, the cheeses are dried in hot rooms, at temperatures which may exceed 25°C, so as to accelerate the initial physiological loss of water. The surface coating of the cheese is thus dried, which coating is derived from the application of an aqueous polymer dispersion which forms a coating film once all of the water in which the polymer is dispersed has evaporated.

Subsequently transferring the cheeses from the hot drying environment into refrigerated maturation chambers, which are usually kept at temperatures lower than 10°C, inevitably results in the formation of drops of condensation which, together with the water normally lost by the cheese in the initial maturation period, increase the ambient humidity, creating favorable conditions for the formation of mold on the surface of the cheeses.

In order to combat these phenomena, it is known to treat the cheeses with aqueous solutions containing organic active ingredients, in particular antibiotic active ingredients, such as pimaricin E235, or sorbic acid. However, once applied to the surface of a cheese, these organic active ingredients tend to migrate to the interior of said cheese, negatively impacting the organoleptic properties of said cheese and creating possible risks for the consumer.

US 2019/0117528 describes the use of glass bubbles as fillers in composite materials to increase tissue mass or in biomedical or cosmetic applications.

WO 2011/160183 describes the use of glass bubbles as fillers in a composite epoxy foam for use in underwater devices.

Koleske J. et al., "Additives Reference Guide," Picmag, 6/1/2013, states that glass bubbles may be used in thermal or acoustic insulation coatings.

CN 1 123 772 describes a method for preparing glass bubbles that may be used as fillers for unsaturated polyester, resins, paints, adhesives, sealing agents, detergents and putty.

An object of this invention is therefore that of overcoming the disadvantages of the prior art mentioned above.

This object is achieved by means of a method for treating a rinded cheese, which method comprises a step of forming a coating film for said cheese by using an aqueous dispersion comprising, with reference to 100 parts by weight of water:
- from 1 to 150 parts by weight of a polymer, the monomeric units of which are selected from the group consisting of ethylene, vinyl and acrylic esters of saturated fatty acids having from 2 to 16 carbon atoms, vinyl versatate, and maleic and formic acid esters of saturated alcohols having from 4 to 8 carbon atoms, and
- from 0.1 to 5 parts by weight of glass bubbles.

Said glass bubbles advantageously consist of 97-100% by weight of soda-lime borosilicate glass (CAS no. 65997-17-3) and 3-0% by weight of amorphous silica (CAS no. 7631-86-9), and/or are present in the dispersion in a quantity between 0.1 and 0.5 parts by weight per 100 parts by weight of water. Glass bubbles which may be used in the method of this invention are sold, for example, by 3M Advanced Materials Division under the name Glass Bubbles iM30K. In any case, as also shown in the preceding section of this disclosure dealing with the prior art, the use of glass bubbles in the food industry, in particular for treating rinded cheeses, was completely unknown prior to the development of this invention.

Said aqueous dispersion is advantageously kept at a temperature between 10 and 25°C.

According to one embodiment of the method of the invention, said rinded cheese is immersed into said dispersion, preferably for a period of time between 1 and 5 seconds.

According to another embodiment of the method of the invention, said dispersion is applied to the surface of said rinded cheese. It may be applied by means of a sponge and/or brush or by means of a felt or spray coating machine, for example.

The step of forming said coating film typically ends with a drying period, and, after this forming step, a step of maturing the cheese takes place.

The maturing step advantageously has a duration between 10 and 365 days, and is performed at a temperature between 2 and 12°C.

This invention also relates to a rinded cheese coated by a protective film, which cheese may be obtained by carrying out the method described above.

The coating film obtained by the treatment of the invention limits the loss of water contained in the cheeses and thus the relative weight loss, and hinders the humidity created as a result of the effect of condensation caused by being moved from the drying environment to the maturation environment, thus preventing the formation of mold and bacteria, which it would otherwise only be possible to hinder by using protective coating formulations of preservatives which tend to migrate into the cheeses, thus producing the aforementioned undesired effects.

By contrast, the aforementioned glass bubbles do not tend to migrate into the treated cheeses, and make the aqueous dispersion more stable and more resistant, creating a significant improvement in the barrier effect of the coating film which is less susceptible to attack from mold and bacteria both during formation and once formed. This advantageous property of the glass bubbles also exempts the producer and/or vendor of the cheese treated in this way from having to declare the presence thereof on the label.

Further advantages and features of this invention will become evident from the following embodiments provided by way of non-limiting example. Unless otherwise stated, all of the percentages mentioned are to be understood as percentages by weight.

### EXAMPLE 1

A dispersion is formed by mixing the following ingredients in the percentages by weight indicated:

| | |
|---|---|
| - Vinavil CF5 (aqueous emulsion) | 89.7% |
| - Glass Bubbles iM30K | 0.3% |
| - Water | 10.0% |

This dispersion is used to form a bath kept at ambient temperature. A block of provolone cheese is immersed in this bath for a period of time of approximately 3 seconds.

After being immersed in the bath, the cheese is dried in a hot room at a temperature of 25°C, and then subjected to maturation for 180 days in a well ventilated chamber that is kept at a temperature of 10-12°C and a relative humidity of 80%. At the end of maturation, the cheese has a coating film which makes it resistant to the deposition of drops of condensation, as well as free from mold, bacterial loads and surface viruses.

### EXAMPLE 2 (comparative example)

A dispersion is formed by mixing the following ingredients in the percentages by weight indicated:

| | |
|---|---|
| - Vinavil CF5 | 50% |
| - Silver Zeolite A | 0.3% |
| - Water | 49.7% |

This dispersion is used to form a bath kept at ambient temperature. A block of Asiago cheese is immersed in this bath for a period of time of approximately 3 seconds.

After immersion and the subsequent dripping step, the Asiago cheese is dried in a hot room at 25°C. Once this step has been completed, the cheese is placed in a maturation chamber at 85% relative humidity and a temperature of 12°C.

During the first 30 days of maturation, moisture on the surface of the cheese and the formation of black mold spots were observed.

### EXAMPLE 3

A dispersion is formed by mixing the following ingredients in the percentages by weight indicated:

| | |
|---|---|
| - Vinavil CF5 | 50% |
| - Glass Bubbles iM30K | 0.3% |
| - Water | 49.7% |

This dispersion is used to form a bath kept at ambient temperature. A block of Asiago cheese is immersed in this bath for a period of time of approximately 3 seconds.

After immersion and the subsequent dripping step, the Asiago cheese is dried in a hot room at 25°C. Once this step has been completed, the cheese is placed in a maturation chamber at 85% relative humidity and a temperature of 12°C.

By comparison with example 2, a sharp decrease in the formation of moisture on the surface of the cheese was observed during the first 30 days of maturation, and the cheese appeared drier and more uniform. Moreover, no black mold spots were observed.

Moreover, the weight loss during maturation of the cheese in example 3 was lower by approximately 0.1% with respect to that in comparative example 2, thus demonstrating greater impermeability, which is a key parameter for ensuring optimal maturation without the formation of surface mold.

In summary, the comparison between examples 2 and 3, which differ only in terms of the active ingredient of the aqueous dispersion, confirms a surprising greater effectiveness of the glass bubbles used for the first time according to this invention in order to limit the loss of water contained in the cheese and the relative weight loss during maturation, as well as to hinder condensation on the external surface of the cheese, which condensation favors the formation of mold and the proliferation of bacteria.

Of course, without prejudice to the principle of the invention, the carrying out details and the embodiments may vary widely with respect to that which has been described purely by way of example, without thereby departing from the claimed scope. For example, all of the substances conventionally used in this field, such as natamycin, sorbic acid, potassium sorbate, etc., may also be added to the aqueous dispersion.

## Claims

1. A method for treating a rinded cheese, which comprises a step forming a coating film for said cheese by using an aqueous dispersion comprising, with reference to 100 parts by weight of water:
- from 1 to 150 parts by weight of a polymer, the monomeric units of which are selected from the group consisting of ethylene, vinyl and acrylic esters of saturated fatty acids having from 2 to 16 carbon atoms, vinyl versatate, and maleic and formic acid esters of saturated alcohols having from 4 to 8 carbon atoms, and
- from 0.1 to 5 parts by weight of glass bubbles.

2. The method according to claim 1, wherein said glass bubbles consist of 97-100% by weight of soda-lime borosilicate glass and 3-0% by weight of amorphous silica.

3. The method according to claim 1 or 2, wherein said dispersion is kept at a temperature between 10 and 25°C.

4. The method according to any one of the preceding claims, wherein said rinded cheese is immersed into said dispersion, preferably for a period of time between 1 and 5 seconds.

5. The method according to any one of the preceding claims 1 to 3, wherein said dispersion is applied to the surface of said rinded cheese.

6. The method according to any one of the preceding claims, wherein the step of forming said coating film ends with a drying period, and wherein, after said forming step, a step of maturing the cheese takes place.

7. The method according to claim 6, wherein said maturating step has a duration between 10 and 365 days.

8. The method according to claim 6 or 7, wherein said maturating step is performed at a temperature between 2 and 12°C.

9. The method according to any one of the preceding claims, wherein said aqueous dispersion contains, with reference to 100 parts by weight of water, from 0.1 to 0.5 parts by weight of glass bubbles.

10. A rinded cheese coated by a film comprising a polymer, the monomeric units of which are selected from the group consisting of ethylene, vinyl and acrylic esters of saturated fatty acids having from 2 to 16 carbon atoms, vinyl versatate, and maleic and formic acid esters of saturated alcohols having from 4 to 8 carbon atoms, and glass bubbles, said coated cheese being obtainable by carrying out the method according to any one of the preceding claims.
